# EUROPÄISCHE PATENTSCHRIFT

(11) **EP 2 187 075 B1**
(45) Veröffentlichungstag und Bekanntmachung des Hinweises auf die Patenterteilung: **09.11.2011**
(21) Anmeldenummer: 09011571.8
(22) Anmeldetag: 10.09.2009
(51) Int. Cl.: F16C 39/06, D01H 4/12

(54) **Axiallager**
Axial bearing
Palier axial

(30) Priorität: 12.11.2008 DE 102008056878
(43) Veröffentlichungstag der Anmeldung: 19.05.2010
(73) Patentinhaber: Oerlikon Textile GmbH & Co. KG, 42897 Remscheid (DE)
(72) Erfinder: Winzen, Lothar, 41812 Erkelenz (DE)
(74) Vertreter: Hamann, Arndt

(56) Entgegenhaltungen:
- DE-A1- 2 634 070
- US-A- 5 622 040

## Beschreibung

Die Erfindung betrifft ein Axiallager für einen im Lagerzwickel einer Stützscheibenlagerung axialschubfrei gelagerten, mit hoher Drehzahl umlaufenden Spinnrotor einer Offenend-Spinnvorrichtung mit den Merkmalen des Oberbegriffes des Anspruches 1.

Im Zusammenhang mit Offenend-Rotorspinnmaschinen sind seit langem Spinnaggregate bekannt, bei denen der mit hoher Drehzahl in einem unterdruckbeaufschlagten Rotorgehäuse umlaufende Spinnrotor mit seinem Rotorschaft in den Lagerzwickeln einer Stützscheibenlageranordnung abgestützt ist und über ein endseitig angeordnetes mechanisches Axiallager positioniert wird.

Die Achsen der beiden Stützscheibenpaare sind dabei derart geschränkt, dass auf den Rotorschaft ein Axialschub ausgeübt wird, der den Rotorschaft in Anlage an dem mechanischen Axiallager hält.

Mit dieser in der Praxis bewährten und beispielsweise in der DE-OS 25 14 734 ausführlich beschriebenen Art der Spinnrotorlagerung sind Rotordrehzahlen von > 100.000 Umdrehungen pro Minute zu realisieren.

Nachteilig bei dieser Art der Spinnrotorlagerung ist allerdings, dass aufgrund der Schränkung der Stützscheiben zwischen den Laufflächen der Stützscheiben und dem Rotorschaft erhöhte Reibung auftritt, die zu einer Erwärmung der Laufflächen der Stützscheiben führt. Durch diese Reibungswärme werden nicht nur die Laufflächen der Stützscheiben erheblich beansprucht, sondern zur Überwindung dieser Reibung ist auch zusätzliche Energie notwendig.

Bei solchen Spinnrotorlagerungen sind außerdem die mechanischen Axiallager auch bei vorschriftsmäßiger Schmierung einem nicht unerheblichen Verschleiß unterworfen.

Es ist daher in der Vergangenheit bereits vorgeschlagen worden, die Spinnrotoren axialschubfrei zu lagern und die mechanischen Axiallager durch verschleißfreie magnetische Axiallager zu ersetzen.

Offenend-Spinnvorrichtungen, bei denen der Spinnrotor axialschubfrei in den Lagerzwickeln einer Stützscheibenlagerung abgestützt und durch ein rotorschaftendseitig angeordnetes magnetisches Axiallager positioniert wird, sind beispielsweise durch die EP 1 043 431 A1, die EP 1 101 845 B1 oder die DE 100 50 694 A1 bekannt.

Derartige magnetische Axiallager verfügen beispielsweise über eine statische Magnetlagerkomponente mit zwei beidseits durch Polscheiben begrenzten Permanentmagnetringen sowie einer zugehörigen dynamischen Magnetlagerkomponente, die durch drei im Abstand der Polscheiben am Rotorschaft des Spinnrotors angeordnete ferromagnetische Stege gebildet wird.

Da bei solchen magnetischen Axiallagern unbedingt verhindert werden muss, dass die ferromagnetischen Stege der dynamischen Magnetlagerkomponente während des Spinnbetriebes oder während der Rotorreinigung, bei der der Spinnrotor auf der Stützscheibenlagerung mit einem Kippmoment beaufschlagt wird, an die Polscheiben der statischen Magnetlagerkomponente anlaufen, sind diese magnetischen Axiallager außerdem mit Schutzeinrichtungen ausgestattet, die einen körperlichen Kontakt zwischen den beiden Magnetlagerkomponenten zuverlässig verhindern.

Bei dem Axiallager gemäß EP 1 043 431 A1 ist die statische Magnetlagerkomponente beispielsweise in einer Lagerbuchse angeordnet, die axial verschiebbar im Lagergehäuse des Axiallagers angeordnet ist und durch eine Excenterelement positioniert werden kann.

Die Lagerbuchse sowie ein in die Lagerbuchse eingeschraubtes Arretierungsmittel, das die statische Magnetlagerkomponente in der Lagerbuchse fixiert, sind dabei aus einem nicht ferromagnetischen Metall, vorzugsweise aus Messing, gefertigt. Das Arretierungsmittel ist außerdem mit einem Stützelement ausgestattet, das sowohl einen axialen als auch einen radialen Anlaufschutz für den Rotorschaft des Spinnrotors darstellt. Das heißt, das Arretierungsmittel weist eine Schutzhülse mit Stützflächen auf, die mit einer reibwertreduzierenden sowie verschleißgeschützten Oberflächenschicht versehen und in geringem radialen Abstand zum Rotorschaft angeordnet sind.

Das magnetische Axiallager gemäß EP 1 101 845 B1 weist einen vergleichbaren Aufbau auf.

Auch bei diesem bekannten Axiallager ist die statische Magnetlagerkomponente in einer Lagerbuchse angeordnet, die aus einem nicht ferromagnetischen Metall gefertigt sowie axial verschiebbar und durch eine Excenterelement positionierbar im Lagergehäuse des Axiallagers angeordnet ist.

Dieses bekannte Axiallager weist außerdem ein axiales Notlauflager in Form eines Keramikstiftes, der in das die Lagerbuchse verschließende Arretierungsmittel eingelassen ist sowie einen radialen Anlaufschutz, der ebenfalls als Keramikstiftes ausgebildet.

Mit den vorstehend beschriebenen Axiallagern konnte zwar verhindert werden, dass die Magnetlagerkomponenten dieser Axiallager in direkten Kontakt miteinander kommen, diese Axiallager sind jedoch aufgrund ihres konstruktiven Aufbaus sowie der verwendeten Materialien relativ kostspielig. Ausgehend vom vorgenannten Stand der Technik liegt der Erfindung die Aufgabe zugrunde, ein magnetisches Axiallager zu entwickeln, das nicht nur betriebssicher, sondern auch sehr kostengünstig herstellbar ist.

Diese Aufgabe wird erfindungsgemäß durch ein Axiallager gelöst, das die im Kennzeichen des Anspruches 1 beschriebenen Merkmale aufweist.

Vorteilhafte Ausgestaltungen der Erfindung sind Gegenstand der Unteransprüche.

Die erfindungsgemäße Ausbildung eines Axiallagers, bei der die statische Magnetlagerkomponente innerhalb einer aus einem Kunststoff gefertigten Lagerbuchse angeordnet und in der Lagerbuchse durch einen aus einem Kunststoff gefertigten Verschlussdeckel lagegenau fixiert ist, zeichnet sich nicht nur durch einen einfachen Aufbau aus, dessen wenige Bauteile als Spritzgussteile gefertigt werden können und somit kostengünstig herstellbar sind, sondern hat auch den Vorteil, dass auf das bislang übliche zusätzliche axiale Notlauflager verzichtet werden kann.

Das heißt, der Verschlussdeckel, der auf seiner Rückseite einen konisch erweiterten Befestigungsansatz aufweist, ist auf seiner, der statischen Magnetlagerkomponente zugewandten Vorderseite mit einem angeformten Anlaufzapfen ausgestattet, der im Bedarfsfall als axiales Notlauflager dient.

Wie im Anspruch 2 beschrieben, ist der Verschlussdeckel vorzugsweise aus Polyetheretherketon gefertigt.

Dieses auch unter der Abkürzung PEEK bekannte Material ist ein hochtemperaturbeständiger thermoplastischer Kunststoff, der gegenüber hohen mechanischen Beanspruchungen, wie sie beim Anlaufen des Rotorschaftes auftreten können, relativ resistent ist.

Gemäß Anspruch 3 ist in vorteilhafter Ausführungsform vorgesehen, dass der Verschlussdeckel über seinen Befestigungsansatz kraftschlüssig in der Lagerbuchse festlegbar ist.

Das heißt, der Verschlussdeckel wird von hinten in die zentrale Aufnahme der Lagerbüchse eingeführt und soweit nach vorne verlagert bis er mit seiner Vorderfläche an den magnetischen Lagerkomponenten der statischen Magnetlagerkomponente anliegt. Während der Positionierung des Verschlussdeckels wird der konische Befestigungsansatz des Verschlussdeckel derart elastisch verformt, dass zwischen der Wandung der zentralen Aufnahme der Lagerbuchse und dem Befestigungsansatz ein Presssitz entsteht, durch den sowohl der Verschlussdeckel als auch die magnetischen Lagerkomponenten sicher in der Lagerbuchse fixiert werden.

Wie im Anspruch 4 beschrieben, ist der Verschlussdeckel in vorteilhafter Ausführungsform auf seiner Vorderseite mit einem radialen Anlaufschutz für den Rotorschaft des Spinnrotors ausgestattet.

Außerdem weist jede der Polscheiben einen lichten Querschnitt auf, der im Bereich einer im Einbauzustand der Polscheiben vertikal angeordneten Achse eine größere Ausdehnung aufweist als im Bereich einer zu der vertikalen Achse orthogonal angeordneten Achse.

Der Einsatz derartiger Polscheiben führt gegenüber den bislang bei Axiallagern üblichen Polscheiben mit einem kreisrunden lichten Querschnitt zu einer Änderung der Stärke der radialen magnetischen Kraftkomponente des Axiallagers.

Das heißt, durch einen relativ breiten Ringspalt im oberen Bereich der vertikalen Symmetrieachse kommt es nicht nur zu einer deutlichen Abschwächung der Stärke der nach oben gerichteten radialen Kraftkomponente des magnetischen Axiallagers, wobei die Axialsteifigkeit des Lagers aufgrund der nach wie vor relativ geringen Ringspaltbreite in den restlichen Bereichen nahezu unverändert bleibt, sondern durch den relativ breiten Ringspalt zwischen Polscheibe und Rotorschaft wird auch Platz zur Positionierung eines radialen Anlaufschutzes für den Rotorschaft des Spinnrotors geschaffen.

Dieser in den Verschlussdeckel integrierte radiale Anlaufschutz verhindert zuverlässig, dass sich die ferromagnetischen Stege der dynamischen Magnetlagerkomponente und die Polscheiben der statischen Magnetlagerkomponente berühren können, wenn während des Spinnbetriebes oder insbesondere während der Rotorreinigung, der auf der Stützscheibenlagerung abgestützte Spinnrotor mit einem Kippmoment beaufschlagt wird.

Auch ein eventuelles kurzes Anlaufen des Rotorschaftes an den radialen Anlaufschutz gestaltet sich dabei weitestgehend unproblematisch, da durch das weichere Material des Verschlussdeckels verhindert wird, dass der Rotorschaft des Spinnrotors beschädigt werden kann.

Wie im Anspruch 5 beschrieben, weisen die Polscheiben, vorzugsweise einen lichten Querschnitt, die Form eines Ovals auf.

Mit Polscheiben, deren lichter Querschnitt die Form eines Ovals aufweist, lässt sich bei entsprechender Ausrichtung im Bezug auf den Rotorschaft auf einfache Weise die radiale Kraftkomponente eines magnetischen Axiallagers so weit herabsetzen, dass insbesondere nach einer Rotorreinigung, beispielsweise durch ein selbsttätig arbeitendes Reinigungsaggregat, gewährleistet ist, dass der Rotorschaft durch den textilmaschineneigenen Tangentialriemen bzw. durch die spinnstelleneigene Andrückrolle bereits vor dem Wiederanlaufen der Spinnvorrichtung in seine Betriebsstellung zurückgedrückt und vorschriftsmäßig auf der Stützscheibenlagerung positioniert ist.

Die Lagerbuchse weist in vorteilhafter Ausführungsform im Bereich ihrer Mantelfläche eine Längsnut auf, die mit einem in eine Lagerbohrung des Lagergehäuses ragenden Führungsbolzen korrespondiert (Anspr. 6).

Durch eine solche Kombination Führungsbolzen/Längsnut kann auf relativ einfache Weise gewährleistet werden, dass die Lagerbuchse nur in vorschriftsmäßiger Ausrichtung im Lagergehäuse positioniert werden kann, was in Verbindung mit den in den Ansprüchen 7 und 8 beschriebenen Ausführungsformen sicherstellt, dass die Polscheiben der statischen Magnetlagerkomponente während des Spinnbetriebes stets winkelgenau positioniert sind.

Die Erfindung ist nachfolgend anhand der in den Zeichnungen dargestellten Ausführungsbeispiele näher erläutert.

Es zeigt:
- Fig. 1: eine Offenend-Spinnvorrichtung mit einem Spinnrotor, der mit seinem Rotorschaft in den Lagerzwickeln einer Stützscheibenlagerung abgestützt und über ein magnetisches Axiallager positioniert ist, das die erfindungsgemäße Ausbildung aufweist,
- Fig. 2: in Seitenansicht das in Fig. 1 dargestellte magnetische Axiallager, in einem größeren Maßstab sowie im Schnitt,
- Fig. 3: das in Fig. 2 dargestellte magnetische Axiallager, gemäß Schnitt III-III der Fig. 2,
- Fig. 4: den Verschlussdeckel zum Fixieren der magnetischen Lagerkomponenten einer statischen Magnetlagerkomponente, in Seitenansicht und im Schnitt,
- Fig. 5: den in Fig. 4 dargestellten Verschlussdeckel, gemäß Pfeil X der Fig. 4.

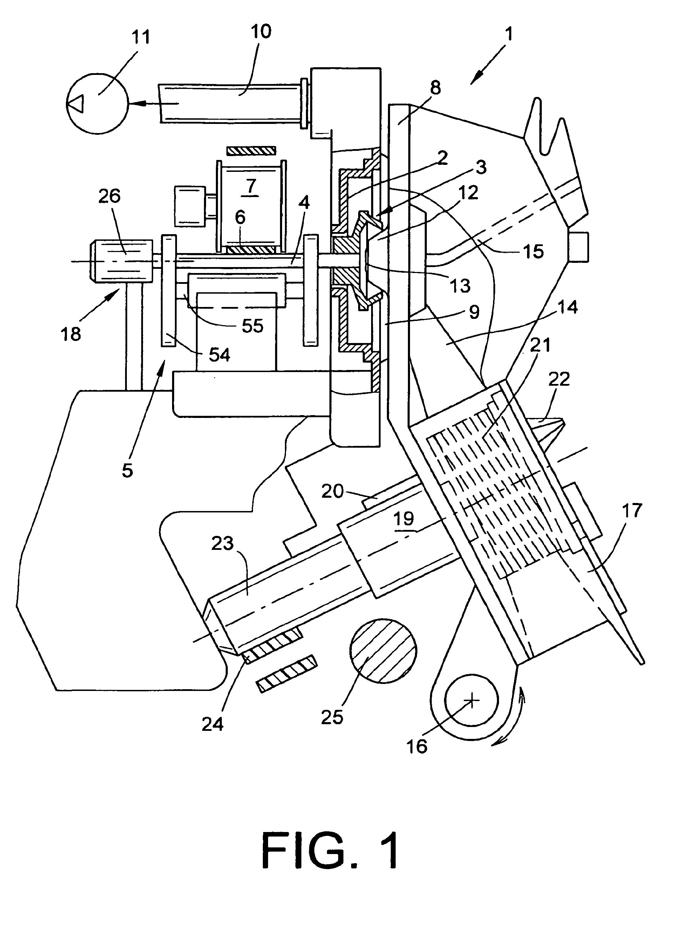

Die in Figur 1 dargestellte Offenend-Spinnvorrichtung trägt insgesamt die Bezugszahl 1.

Solche Spinnvorrichtungen verfügen, wie bekannt, jeweils über ein Rotorgehäuse 2, in dem die Spinntasse eines Spinnrotors 3 mit hoher Drehzahl umläuft.

Der Spinnrotor 3 ist dabei mit seinem Rotorschaft 4 im Lagerzwickel einer Stützscheibenlagerung 5 abgestützt und wird durch einen maschinenlangen ersten Tangentialriemen 6, der durch eine Andrückrolle 7 angestellt wird, beaufschlagt.

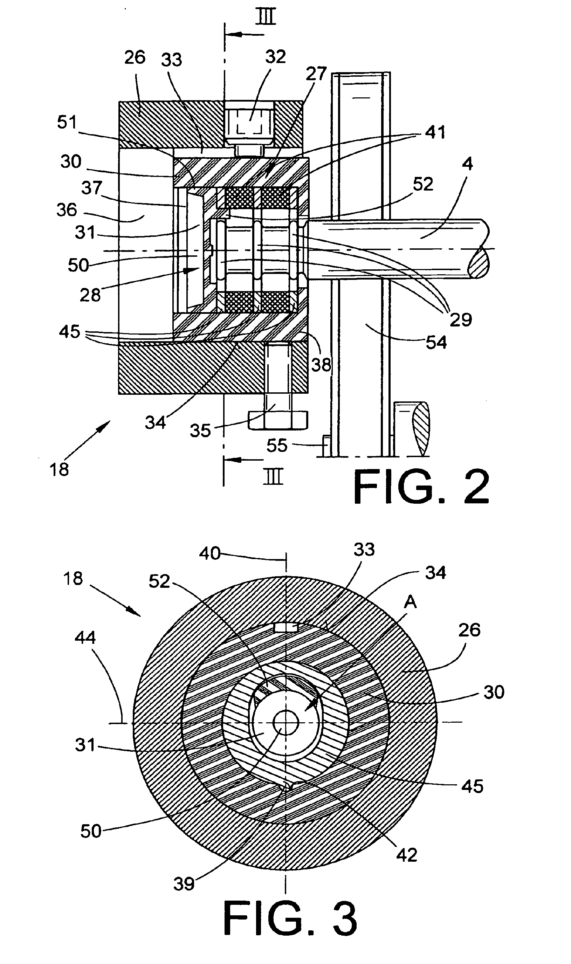

Die axiale Positionierung des Rotorschaftes 4 auf der Stützscheibenlagerung 5 erfolgt über ein permanentmagnetisches Axiallager 18, das in Figur 2 im Schnitt und im Detail dargestellt ist.

Wie aus Fig. 1 ersichtlich, ist das nach vorne hin an sich offene Rotorgehäuse 2 während des Betriebes durch ein schwenkbar gelagertes Deckelelement 8, in das eine (nicht näher dargestellte) Kanalplatte mit einer Dichtung 9 eingelassen ist, verschlossen.

Das Rotorgehäuse 2 ist außerdem über eine entsprechende Unterdruckleitung 10 an eine Unterdruckquelle 11 angeschlossen, die den beim Spinnprozess im Rotorgehäuse 2 benötigten Spinnunterdruck erzeugt.

Im Deckelelement 8 ist ein Kanalplattenadapter 12 angeordnet, der die Fadenabzugsdüse 13 sowie den Mündungsbereich des Faserleitkanals 14 aufweist. An die Fadenabzugsdüse 13 schließt sich ein Fadenabzugsröhrchen 15 an.

Außerdem ist am Deckelelement 8, das um eine Schwenkachse 16 begrenzt drehbar gelagert ist, ein Auflösewalzengehäuse 17 festgelegt. Das Deckelelement 8 weist des Weiteren rückseitig Lagerkonsolen 19, 20 zur Lagerung einer Auflösewalze 21 beziehungsweise eines Faserbandeinzugszylinders 22 auf.

Die Auflösewalze 21 wird im Bereich ihres Wirtels 23 durch einen umlaufenden, maschinenlangen zweiten Tangentialriemen 24 angetrieben, während der (nicht dargestellte) Antrieb des Faserbandeinzugszylinders 22 vorzugsweise über eine Schneckengetriebeanordnung erfolgt, die auf eine maschinenlange Antriebswelle 25 geschaltet ist.

Figur 2 zeigt das erfindungsgemäße Axiallager im Detail, wobei das Axiallager 18 im Längsschnitt dargestellt ist.

Von dem in Fig. 1 gezeigten Stützscheibenlager 5 ist lediglich die hintere Stützscheibe 54 mit der zugehörigen Lagerwelle 55 angedeutet.

Das magnetische Axiallager 18 besteht insgesamt aus einer statischen Magnetlagerkomponente 27, die über eine Lagerbuchse 30 in einem Lagergehäuse 26 angeordnet ist, sowie aus einer dynamischen Magnetlagerkomponente 28, die durch ferromagnetische Stege 29 am Rotorschaft 4 des Spinnrotors 3 gebildet wird.

Die ferromagnetischen Stege 29 der dynamischen Magnetlagerkomponente 28 haben dabei vorzugsweise die gleiche Breite, wie die Polscheiben 45 der stationären Magnetlagerkomponente 27.

Wie an sich bekannt, weist die statische Magnetlagerkomponente 27 Permanentmagnetringe 41 mit jeweils beidseitig angeordneten Polscheiben 45 auf.

Die Permanentmagnetringe 41 sind vorzugsweise durch axial polarisierte Seltenerdmagneten gebildet, wobei sich gleiche Pole (N/N beziehungsweise S/S) gegenüberstehen.

Wie insbesondere aus Fig. 3 ersichtlich, sind die Polscheiben 45, die vorteilhafterweise einen ovalen lichten Querschnitt A aufweisen, innerhalb der Lagerbuchse 30 durch einen Zentrieransatz 39, der mit einer Führungsnut 42 in der Lagerbuchse 30 korrespondiert, winkelgenau ausgerichtet und bestehen aus einem ferromagnetischen Material, vorzugsweise aus Stahl.

Die Polscheiben 45 und die Permanentmagnetringe 41 sind innerhalb der aus Kunststoff gefertigten Lagerbuchse 30 durch einen Verschlussdeckel 31 festgelegt, der ebenfalls aus einem Kunststoff hergestellt ist.

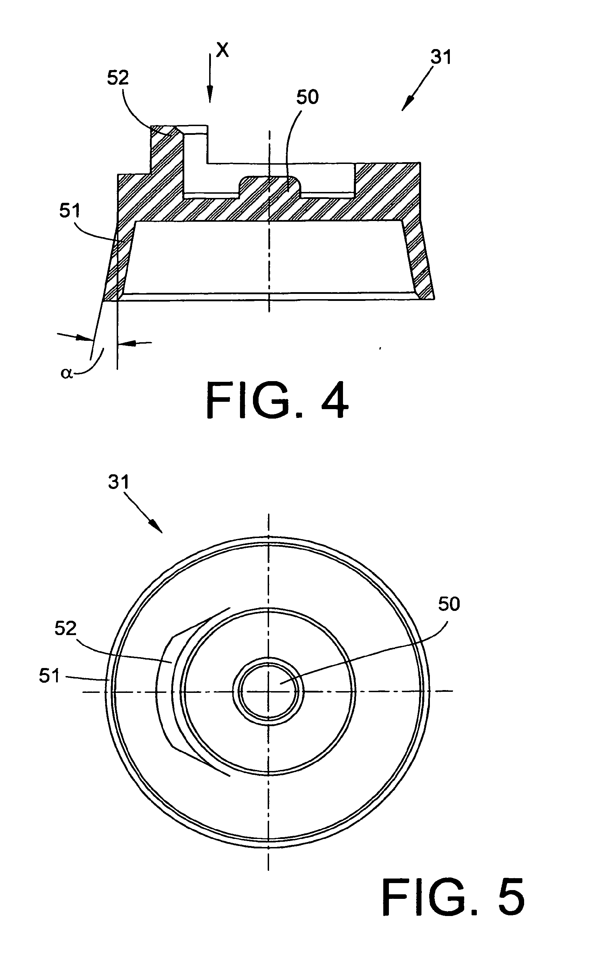

Vorzugsweise ist dabei wenigsten der Verschlussdeckel 31, der, wie insbesondere aus den Figuren 4 und 5 ersichtlich, einen rückseitigen, konisch erweiterten Befestigungsansatz 51, einen in Richtung des Rotorschaftes 4 weisenden Anlaufzapfen 50 sowie einen im Montagezustand oberhalb des Rotorschaftes 4 positionierten radialen Anlaufschutz 52 aufweist, aus Polyetheretherketon gefertigt.

Zum Fixieren der magnetischen Lagerkomponenten der statischen Magnetlagerkomponente 27 wird der Verschlussdeckel 31, nachdem zuvor die Permanentmagnetringe 41 und die Polscheiben 45 in die zentrale Aufnahme 37 der Lagerbuchse 30 eingelegt wurden, ebenfalls in die Aufnahme 37 eingeführt und soweit nach vorne verlagert, bis die vordere Polscheibe 45 am Anschlagring 38 der Lagerbuchse 30 anliegt.

Der Verschlussdeckel 31 legt sich dabei mit seinem elastisch verformbaren Befestigungsansatz 51 kraftschlüssig an die Wandung der zentralen Aufnahme 37 der Lagerbuchse 30 an und sichert die magnetischen Lagerkomponenten kraftschlüssig in der Lagerbuchse 30.

Die Polscheiben 45 weisen einen lichten Querschnitt A mit einer ovalen Form auf, wobei die größte Ausdehnung des Ovals im oberen Bereich der vertikalen Achse 40 gegeben ist.

Durch eine solche Ausbildung gelingt es, die radiale Kraftkomponente des permanentmagnetischen Axiallagers 18 so zu beeinflussen, dass der Rotorschaft 4 nach Beendigung des Reinigungsprozesses durch den Tangentialriemen 6 bzw. die Andrückrolle 7 sofort sicher vom Anlaufschutz 52 des Verschlussdeckels 31 gelöst und zuverlässig in den Lagerzwickeln der Stützscheibenlagerung 5 positioniert wird.

Die Axialsteifigkeit des magnetischen Axiallagers 18 bleibt dabei aufgrund des geringen Luftspaltes in den übrigen Bereichen, insbesondere im Bereich der horizontalen Achse 44, im Wesentlichen erhalten.

Die Lagerbuchse 30, die, wie vorstehend erwähnt, vorzugsweise ebenfalls aus einem Kunststoff gefertigt ist, ist ihrerseits in einer Lagerbohrung 36 des stationären Lagergehäuses 26 der Offenend-Spinnvorrichtung 1 festlegbar und wird dabei durch einen Führungsbolzen 32, der in eine Längsnut 33 in der Mantelfläche 34 der Lagerbuchse 30 greift, winkelgenau ausgerichtet sowie durch einen Schraubenbolzen 35 zuverlässig fixiert.

## Patentansprüche

1. Axiallager für einen im Lagerzwickel einer
Stützscheibenlagerung axialschubfrei gelagerten, mit hoher Drehzahl umlaufenden Spinnrotor einer Offenend-Spinnvorrichtung, mit einer in einem Lagergehäuse festgelegten statischen Magnetlagerkomponente (27), die wenigstens zwei beidseits durch Polscheiben begrenzte, axial polarisierte Permanentmagnetringe (41) aufweist sowie einer dynamischen Magnetlagerkomponente (28), die durch am Rotorschaft (4) des Spinnrotors (3) im Abstand der Polscheiben (45) angeordnete ferromagnetische (29) Stege gebildet wird,
**dadurch gekennzeichnet,**
**dass** die statische Magnetlagerkomponente (27) innerhalb einer aus einem Kunststoff gefertigten Lagerbuchse (30) angeordnet und durch einen aus einem Kunststoff gefertigten Verschlussdeckel (31) fixiert ist und
**dass** der Verschlussdeckel (31) auf seiner der statischen Magnetlagerkomponente (27) zugewandten Vorderseite über einen als axiales Notlauflager dienenden Anlaufzapfen (50) verfügt und auf seiner Rückseite einen konisch erweiterten, im Einbauzustand elastisch verformten Befestigungsansatz (51) aufweist.

2. Axiallager nach Anspruch 1, **dadurch gekennzeichnet, dass** der Verschlussdeckel (31) aus Polyetheretherketon (PEEK) gefertigt ist.

3. Axiallager nach Anspruch 1, **dadurch gekennzeichnet, dass** der Verschlussdeckel (31) über seinen Befestigungsansatz (51) kraftschlüssig in der Lagerbuchse (30) festlegbar ist.

4. Axiallager nach Anspruch 1, **dadurch gekennzeichnet, dass** der Verschlussdeckel (31) auf seiner Vorderseite einen radialen Anlaufschutz (52) für den Rotorschaft (4) des Spinnrotors (3) aufweist und
dass jede Polscheibe (45) einen lichten Querschnitt (A) aufweist, der im Einbauzustand der Polscheiben (45) im Bereich einer vertikal angeordneten Achse (40) eine größere Ausdehnung aufweist, als im Bereich einer zur vertikalen Achse (40) orthogonal angeordneten Achse (44).

5. Axiallager nach Anspruch 4, **dadurch gekennzeichnet, dass** der lichte Querschnitt (A) der Polscheibe (45) die Form eines Ovals aufweist.

6. Axiallager nach Anspruch 1, **dadurch gekennzeichnet, dass** die Lagerbuchse (30) im Bereich ihrer Mantelfläche (34) eine Längsnut (33) aufweist, die mit einem in eine Lagerbohrung (36) des Lagergehäuse (26) ragenden Führungsbolzen (32) korrespondiert.

7. Axiallager nach Anspruch 1, **dadurch gekennzeichnet, dass** die Lagerbuchse (30) im Bereich einer zentralen Aufnahme (37) einen endseitigen Anschlagring (38) aufweist und
dass in der zentralen Aufnahme (37) eine Führungsnut (42) angeordnet ist, die eine winkelgenaue Positionierung der Polscheiben (45) der statischen Magnetlagerkomponente (37) innerhalb der zentralen Aufnahme (37) der Lagerbuchse (30) ermöglicht.

8. Axiallager nach Anspruch 7, **dadurch gekennzeichnet, dass** jede Polscheibe (45) einen ihre Einbaulage vergebenden Zentrieransatz (39) aufweist.

## Claims

1. Axial bearing for a spinning rotor circulating at a high rotational speed, mounted free of axial thrust in the bearing interstice of a support disc bearing arrangement, of an open-end spinning device, with a static magnetic bearing component (27) which is secured in a bearing housing and has at least two axially polarised permanent magnet rings (41) limited on either side by pole discs, and a dynamic magnetic bearing component (28), which is formed by ferromagnetic (29) webs arranged on the rotor shaft (4) of the spinning rotor (3) at the spacing from the pole discs (45),
**characterised in that**
the static magnetic bearing component (27) is arranged inside a bearing bush (30) manufactured from a plastic material and is secured by a closing lid (31) manufactured from a plastic material and **in that** the closing lid (31) on its front side facing the static magnetic bearing component (27) has a stop journal (50) being used as an axial emergency operation bearing and, on its rear side, has a conically widened fastening lug (51) which is elastically deformed in the installed state.

2. Axial bearing according to claim 1, **characterised in that** the closing lid (31) is produced from polyetheretherketone (PEEK).

3. Axial bearing according to claim 1, **characterised in that** the closing lid (31) can be non-positively fixed in the bearing bush (30) by means of its fastening lug (51).

4. Axial bearing according to claim 1, **characterised in that** the closing lid (31), on its front side, has a radial stop protection device (52) for the rotor shaft (4) of the spinning rotor (3) and **in that** each pole disc (45) has an internal cross-section (A) which has a larger extent in the region of a vertically arranged axis (40) in the installed state of the pole discs (45) than in the region of an axis (44) arranged orthogonally with respect to the vertical axis (40).

5. Axial bearing according to claim 4, **characterised in that** the internal cross-section (A) of the pole disc (45) has the shape of an oval.

6. Axial bearing according to claim 1, **characterised in that** the bearing bush (30) has, in the region of its lateral surface (34), a longitudinal groove (33) which corresponds with a guide bolt (32) projecting into a bearing bore (36) of the bearing housing (26).

7. Axial bearing according to claim 1, **characterised in that** the bearing bush (30), in the region of a central receiver (37), has an end stop ring (38) and **in that** a guide groove (42) is arranged in the central receiver (37) and allows a precise angle positioning of the pole discs (45) of the static magnetic bearing component (37) inside the central receiver (37) of the bearing bush (30).

8. Axial bearing according to claim 7, **characterised in that** each pole disc (45) has a centring lug (39) providing its installation position.

## Revendications

1. Palier axial dédié à un rotor de filage d'un dispositif de filature à fibres libérées, tournant à vitesse de rotation élevée et monté, avec absence de poussée axiale, dans l'interstice de montage d'un système de portée à disques d'appui, comprenant un composant statique (27) de portée magnétique, consigné à demeure dans un carter de montage et muni d'au moins deux anneaux (41) à magnétisation permanente et à polarisation axiale, délimités de part et d'autre par des disques polaires, ainsi qu'un composant dynamique (28) de portée magnétique, formé par des membrures ferromagnétiques (29) qui sont disposées sur l'arbre rotorique (4) dudit rotor de filage (3), à distance desdits disques polaires (45),
**caractérisé par le fait**
**que** le composant statique (27) de portée magnétique est logé à l'intérieur d'une douille de portée (30) fabriquée en une matière plastique, et est verrouillé en place par un couvercle obturateur (31) fabriqué en une matière plastique, et
**que** ledit couvercle obturateur (31) est pourvu, sur sa face antérieure tournée vers ledit composant statique (27) de portée magnétique, d'un mentonnet d'adossement (50) remplissant la fonction d'un palier axial de secours, et est muni, sur sa face postérieure, d'un appendice de fixation (51) qui présente un évasement tronconique et est déformé élastiquement à l'état intégré.

2. Palier axial selon la revendication 1, **caractérisé par le fait que** le couvercle obturateur (31) est fabriqué en polyétheréther-cétone (PEEK).

3. Palier axial selon la revendication 1, **caractérisé par le fait que** le couvercle obturateur (31) peut être consigné mécaniquement à demeure dans la douille de portée (30), par l'intermédiaire de son appendice de fixation (51).

4. Palier axial selon la revendication 1, **caractérisé par le fait que** le couvercle obturateur (31) offre, sur sa face antérieure, une protection radiale d'adossement (52) dévolue à l'arbre rotorique (4) du rotor de filage (3), et
que chaque disque polaire (45) est muni d'une section transversale intérieure (A) présentant à l'état intégré des disques polaires (45), dans la région d'un axe (40) disposé verticalement, une plus grande étendue que dans la région d'un axe (44) agencé orthogonalement par rapport audit axe vertical (40).

5. Palier axial selon la revendication 4, **caractérisé par le fait que** la section transversale intérieure (A) du disque polaire (45) revêt la forme d'un ovale.

6. Palier axial selon la revendication 1, **caractérisé par le fait que** la douille de portée (30) présente, dans la région de la surface (34) de son enveloppe, une rainure longitudinale (33) qui coïncide avec un tenon de guidage (32) s'engageant dans un alésage de portée (36) du carter de montage (26).

7. Palier axial selon la revendication 1, **caractérisé par le fait que** la douille de portée (30) est dotée d'une bague extrême de butée (38) dans la région d'un logement central (37), et
qu'une rainure de guidage (42), pratiquée dans ledit logement central (37), autorise un positionnement angulaire précis des disques polaires (45) du composant statique (27) de portée magnétique à l'intérieur dudit logement central (37) de ladite douille de portée (30).

8. Palier axial selon la revendication 7, **caractérisé par le fait que** chaque disque polaire (45) comporte un appendice de centrage (39) instaurant sa position d'intégration.
